(19) Europäisches Patentamt

European Patent Office

Office européen des brevets

(11) Numéro de publication: **0 079 096**
**B1**

(12) **FASCICULE DE BREVET EUROPÉEN**

(45) Date de publication du fascicule du brevet:
22.07.87

(21) Numéro de dépôt: **82201319.9**

(22) Date de dépôt: **22.10.82**

(51) Int. Cl.⁴: **G 01 B 3/10**

(54) Crochet d'accrochage escamotable monté à l'extrémité libre d'un ruban de mesure linéaire.

(30) Priorité: **06.11.81 FR 8120813**

(43) Date de publication de la demande:
**18.05.83 Bulletin 83/20**

(45) Mention de la délivrance du brevet:
**22.07.87 Bulletin 87/30**

(84) Etats contractants désignés:
**AT DE FR GB IT NL**

(56) Documents cité:
**FR-A-1 492 089**
**FR-A-2 199 864**
**FR-A-2 454 082**

(73) Titulaire: **STANLEY- MABO, Zone Industrielle Trépillot, F-25009 Besancon (FR)**

(72) Inventeur: **Scandella, Louis, Chambornay Les Pins, F-70150 Marnay (FR)**

(74) Mandataire: **Mabut, Marie- France, c/o BUGNION S.A. Conseils en Propriété Industrielle Case Postale 375 10, route de Florissant, CH- 1211 Genève 12 - Champel (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 079 096 B1

## Description

La présente invention se rapporte à un dispositif d'accrochage d'un ruban de mesure linéaire, ledit dispositif comportant un crochet d'accrochage et deux plaquettes, le crochet étant escamotable, muni de dents et monté à l'extrémité libre dudit ruban autour d'un axe servant également d'axe d'articulation pour un anneau de tirage, ladite extrémité du ruban étant insérée entre les deux plaquettes dont l'une est munie dudit axe d'articulation et comporte à son extrémité libre une face plane qui sert d'origine pour les graduations dudit ruban, ledit crochet pouvant occuper deux positions stables, soit une position de repos escamotée dans laquelle il se trouve parallèle au plan du ruban, soit une position de travail orientée approximativement à 90° par rapport à la position de repos et dans laquelle il est confondu avec ladite origine.

On connaît déjà des rubans de mesure linéaire qui comportent, fixé sur l'extrémité libre de l'anneau de tirage, un crochet permettant d'immobiliser l'extrémité du ruban pour faciliter la mesure.

Selon le brevet FR N° 1 492 089, le crochet est articulé à l'extrémité du ruban de manière que son axe de pivotement soit confondu avec l'axe d'articulation de l'anneau de tirage lequel axe est monte, sur une plaque support dont l'extrémité est confondue avec l'origine des graduations. Le crochet est constitué par une plaquette rectangulaire munie de deux pointes recourbées à son extrémité ainsi que de dents sur ses côtés latéraux, qui facilitent son accrochage sur l'objet à mesurer et, en position de repos, le crochet est appliqué sur le plan du ruban. Or, à l'usage, on a pu constater que le crochet ne restait pas toujours dans sa position de repos, en particulier lors du transport ou des différentes manipulations de l'instrument, notamment lors de l'enroulement du ruban après une mesure, et qu'il arrivait souvent que ce crochet se soulève légèrement ce qui risquait d'une part de blesser les utilisateurs, d'autre part de provoquer un accrochage indésirable du crochet et par suite sa détérioration.

Selon le brevet FR N° 2 454 082, l'extrémité du ruban de mesure est munie d'un anneau de tirage formé de deux parties rabattables l'une sur l'autre, une partie formant l'anneau de tirage proprement dit, l'autre partie constituant un talon rabattable. L'extrémité du l'anneau éloignée du ruban forme le point zéro des graduations et à proximité de ce point zéro il est prévu un axe d'articulation autour duquel peut pivoter de 90° le talon rabattable dont la face orientée vers le ruban coïncide dans cette position avec le repère zéro.

Le fait que l'origine des graduations soit confondue non pas avec l'extrémité du ruban mais avec l'extrémité de l'anneau de tirage présente des inconvénients tant sur le plan de la réglementation en vigueur que sur celui de l'utilisation.

La présente invention se propose de remédier à ces inconvénients et de fournir un crochet d'extrémité entièrement escamotable, qui ne risque pas de se soulever lors des différentes manipulations de l'instrument et qui répond aux normes de la réglementation en vigueur.

A cet effet, le crochet selon l'invention est caractérisé par le fait que dans sa position de repos il est entièrement encastré dans un évidement que présente l'une des deux plaquettes ledit évidement étant d'une part de dimensions supérieures à celles du crochet de telle sorte que la face extérieure de celui-ci soit en retrait par rapport à la face extérieure de la partie de ladite plaquette qui entoure l'évidement, et d'autre part muni dans son fond d'encoches prévues pour recevoir lesdites dents du crochet.

On voit évidemment l'avantage que présente un tel crochet qui n'entraîne aucune gêne pour les utilisateurs. Par ailleurs, la réalisation de la plaquette d'extrémité peut avantageusement être obtenue par moulage d'une matière plastique, ce qui est très bon marché.

L'invention est exposée plus en détail dans la description qui suit faite à l'aide des dessins annexés représentant deux formes d'exécution.

La figure 1 représente une vue en plan d'une première forme d'exécution de l'extrémité du ruban.

La figure 2 est une vue en coupe de cette même extrémité selon l'axe II-II de la figure 1.

La figure 3 est une vue de dessous de la figure 1.

La figure 4 est une vue agrandie en plan de la plaquette munie de l'évidement dans lequel s'encastre le crochet.

La figure 5 est une vue en coupe d'une deuxième forme d'exécution de l'invention.

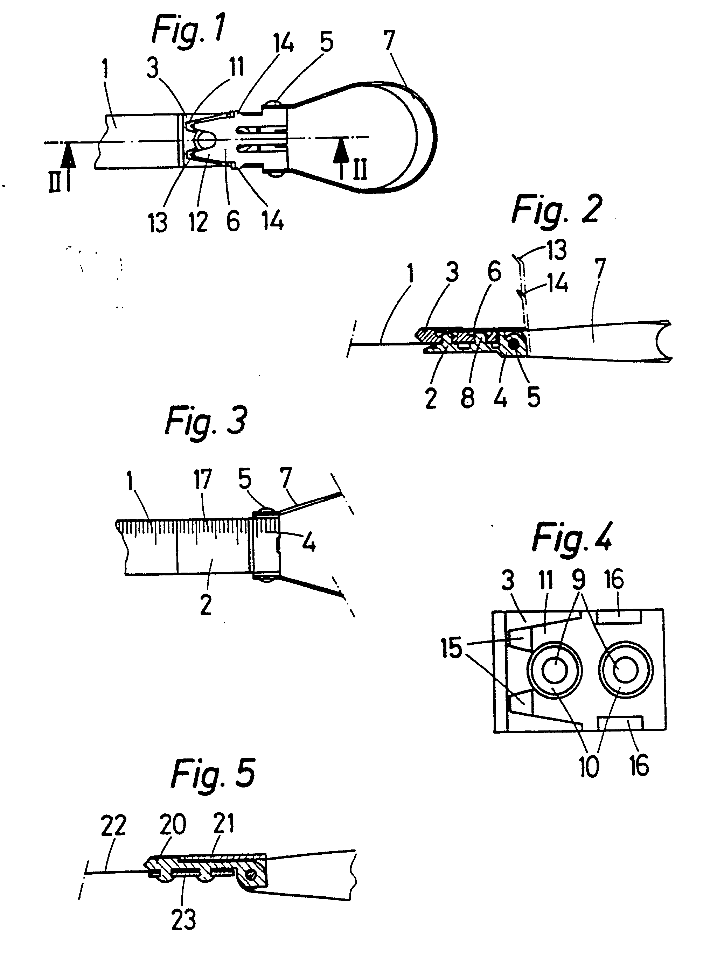

On se réfère aux figures 1 à 4.

L'extrémité libre du ruban de mesure est fixée entre deux plaquettes d'extrémité rectangulaires 2, 3, l'extrémité de la première plaquette 2 servant d'origine pour les graduations. La première plaquette 2 est en outre munie d'un renflement 4 à son extrémité servant d'origine pour les graduations lequel est traversé par un axe 5 dont les extrémités dépassent de part et d'autre du renflement 4 et qui servent à la fixation d'une part, d'un crochet 6, d'autre part, d'un anneau de tirage 7, lesquels peuvent pivoter autour de cet axe 5. La première plaquette 2 est en outre munie de deux ergots 8 prévus pour traverser deux orifices correspondants dans le ruban 1 ainsi que deux orifices 9 dans la deuxième plaquette 3. Ces ergots 8 servent au rivetage de l'ensemble, c'est pourquoi les orifices 9 dans la deuxième plaquette 3 sont entourés d'une creusure qui permet l'écrasement de la tête du rivet.

La deuxième palquette 3 est munie sur sa face supérieure d'un évidement 11 dont la forme et la profondeur correspondent approximativement à la forme et à l'épaisseur du crochet 6. Sur la forme d'exécution représentée, le crochet 6 est muni de deux pointes 12 à son extrémité libre (fig. 1) dont l'extrémité libre 13 est recourbée vers l'intérieur, et deux dents latérales 14. La deuxième plaquette 3 est donc munie d'un évidement 11 d'une dimension légèrement supérieure à celle du crochet 6 de manière que celui-ci puisse s'encastrer entièrement dans cet évidement 11. Pour loger les pointes 12 et les dents latérales 14 du crochet, l'évidement 11 de la plaquette 3 est muni d'encoches plus profondes 15, respectivement 16.

Le crochet 6 est prévu pour occuper deux positions stables: soit une position escamotée dans le logement 11 de la plaquette 3 dans laquelle il ne risque pas d'accrocher quoi que ce soit, soit une position de travail, orientée approximativement à 90° par rapaport à la position de repos, illustrée en traits mixtes sur la figure 2 et dans laquelle il peut servir d'origine pour les mesures par accrochage.

La face dirigée vers l'extérieur de la première plaquette 2 est en outre munie de qraduations 17 qui prolongent jasqu'à l'origine les graduation du ruban 1.

Sur la forme d'exécution illustrée figure 5, c'est la face extérieure de la plaquette 20 servant d'origine pour les graduations qui est munie de l'évidement servant à encastrer le crochet 21 dans sa position de repos. Dans ce cas, le ruban 22 est inséré entre la face intérieure de la plaquette 20 et une deuxième plaquette 23 est retenue sur la plaquette 20 par rivetage.

Dans la première forme d'exécution représentée, la deuxième plaquette 3 munie de l'évidement 6 est préférablement obtenue par moulage d'une matière plastique tandis que dans les deux formes d'exécution, la plaquette 2, respectivement 20, sur laquelle doivent s'articuler le crochet et l'anneau de tirage, est preferablement métallique.

## Revendications

1. Dispositif d'accrochage d'un ruban de mesure linéaire (1; 22), ledit dispositif comportant un rochet d'accrochage (6; 21) et deux plaquettes (2, 3; 20, 23), le crochet étant escamotable, muni de dents (13, 14) et monté à l'extrémité libre dudit ruban autour d'un axe (5) servant éqalement d'axe d'articulation pour un anneau de tirage (7), ladite extrémité du ruban étant insérée entre les deux plaquettes (2, 3; 20, 23) dont l'une est munie dudit axe d'articulation (5) et comporte à son extrémité libre une face plane qui sert d'origine pour les graduations dudit ruban (1, 22), ledit crochet pouvant occuper deux positions stables, soit une position de repos escamotée dans laquelle il se trouve parallèle au plan du ruban, soit une position de travail orientée approximativement à 90° par rapport à la position de repos et dans laquelle il est confondu avec ladite origine, ledit dispositif étant caractérisé par le fait que, dans sa position de repos, ledit crochet (6, 21) est entièrement encastré dans un évidement (11) que présente l'une des deux plaquettes (3, 20), ledit évidement étant, d'une part, de dimensions supérieures à celles du crochet de telle sorte que la face extérieure de celui-ci soit en retrait par rapport à la face extérieure de la partie de ladite plaquette qui entoure l'évidement, et, d'autre part, muni dans son fond d'encoches (15, 16) prévues pour recevoir lesdites dents (13, 14) du crochet (6, 21).

2. Dispositif selon la revendication 1, caractérisé par le fait que, dans sa position de repos, ledit crochet (21) se replie sur la plaquette (20) qui sert d'origine pour les graduations et que c'est cette plaquette (20) qui est muni dudit évidement dans lequel se loge le crochet.

3. Dispositif selon la revendication 1, catactérisé par le fait que, dans sa position de repos, ledit crochet (6) se replie sur la plaquette (3) qui ne sert pas d'origine pour les graduations et que c'est cette plaquette (3) qui est munie dudit évidement (11) dans lequel se loge le crochet (6).

4. Dispositif selon l'une quelconque des revendications précédentes, caractérisé par le fait que la plaquette qui sert d'origine pour les graduatuins est métallique et qu'elle est munie d'ergots qui servent à retenir par rivetage l'extrémité du ruban et la deuxième plaquette.

5. Dispositif selon la revendication 1, caractérisé par le fait que la plaquette (3) qui ne sert pas d'origine pour les graduations est en matière plastique et qu'elle est venue de moulage avec son logement (11) et ses encoches (15, 16).

## Patentansprüche

1. Vorrichtung zum Anhaken eines Längenmessbandes (1; 22), mit einem einklappbaren Haken (6; 21), der Zähnen (13, 14) versehen und am freien Ende des Messbands um eine auch als Drehachse für einen Zugring (7) dienende Achse (5) schwenkbar montiert ist, und mit zwei Plättchen (2, 3; 20, 23), zwischen denen das erwähnte freie Ende des Messbands eingefügt ist und denen eines die erwähnte Drehachse (5) trägt und an seinem freien Ende eine ebene Fläche aufweist, die als Ursprung für die Meßskalen des Messbands (1, 22) dient, wobei der Haken zwei stabile Stellungen einnehmen kann, entweder eine Ruhestellung, in welcher er paralell zum Messband eingeklappt ist, oder eine näherungsweise um 90° in Bezug auf die Ruhestellung gedrehte Arbeitsstellung, in welcher er mit dem erwähnten Ursprung zusammenfällt, dadurch gekennzeichnet, dass der erwähnte Haken (6, 21) in seiner Ruhestellung vollständig in einer Vertiefung (11) versenkt ist, die in einem der beiden Plättchen (3, 20) angebracht ist, und dass die erwähnte Vertiefung einerseits grössere Abmessungen als der Haken derart aufweist, dass die äussere Fläche des Hakens in Bezug auf die äussere Fläche des die Vertiefung umgebenden Bereichs des erwähnten Plättchens nach innen versetzt ist, und andererseits in ihrem Boden Aussparungen (15, 16) zur Aufnahme der erwähnten Zähne (13, 14) des Hakens (6, 21) hat.

2. Vorrichtung nach Anspruch 1, dadurch gekennzeichnet, dass der erwähnte Haken (21) in seiner Ruhestellung auf das Plättchen (20) umgeklappt ist, welches als Ursprung für die Meßskalen dient, und dass dieses Plättchen (20) mit der Vertiefung versehen ist, in welche der Haken versenkbar ist.

3. Vorrichtung nach Anspruch 1, dadurch gekennzeichnet, dass der erwähnte Haken (6) in seiner Ruhestellung auf das Plättchen (3) umgeklappt ist, welches nicht als Ursprung für die Meßskalen dient, und dass dieses Plättchen (3) mit der erwähnten Vertiefung (11) versehen ist, in welche der Haken (6) versenkbar ist.

4. Vorrichtung nach einem der vorangehenden Ansprüche, dadurch gekennzeichnet, dass das Plättchen, welches als Ursprung für die Meßskalen dient, metallisch ist und dass es mit Stiften versehen ist, welche das Ende des Messbands und das zweite Plättchen durch Vernietung halten.

5. Vorrichtung nach Anspruch 1, dadurch gekennzeichnet, dass das Plättchen (3), welche nicht als Ursprung für die Meßskalen dient, aus einem Kunststoffmaterial besteht, und dass es mit seiner Vertiefung (11) und seinen Aussparungen (15, 16) einteilig geformt ist.

**Claims**

1. Device for hooking a linear tape measure (1; 22) which comprises a hook (6; 21) and a pair of small plates (2, 3; 20, 23), said hook being retractable, provided with teeth (13, and mounted at the free end of said tape measure about a pin (5) also acting as a pivot pin to a pull-ring (7), said tape end being inserted between said plates (2, 3; 20, 23), one (6, 20) of said plates carrying said pivot pin (5) and comprising at its free end a flat face corresponding to the true-zero of the scale marks of said tape measure (1, 22), said hook (6, 21) being adapted to be set in two stable positions, either an inoperative position in which said hook is retracted and substantially parallel to the tape surface, or an operative position in which said hook extends substantially at right angles to said inoperative position and is coplanar with said true-zero face of said one plate, said device being characterised in that in its inoperative position said hook (6, 21) is engaged home in a cavity (11) formed in one of said plates (3; 20), said cavity having on te one hand dimensions greater than those of said hook so that the outer surface of the portion of said hook be somewhat recessed with respect to the outer surface of the portion of said plate which surrounds said cavity, and on the other hand in its bottom, notches (15, 16) adapted to receive said teeth (13, 14) of said hook (6; 21).

2. The device of Claim 1, characterised in that when said hook (21) is in its inoperative position it is folded back on the plate (20) constituting said true-zero mark on the tape measure scale, and that said plate (20) is the plate in which said cavity (11) is formed for receiving said hook (21).

3. The device of Claim 1, characterised in that in its inoperative position said hook (6) is folded back on the plate (3) which does not constitute said true-zero mark on the tape measure scale, and that said cavity (11) engageable by said hook (6) is formed in said plate (3).

4. The device according to any of Claims 1 - 3, characterised in that the plate constituting said true-zero mark on the tape measure scale is a metal plate provided with studs for retaining by riveting the tip of said tape and said second plate.

5. The device according to Claim 1, characterised in that the plate which does not constitute said true-zero mark of said tape measure consists of plastic material and that said plate is molded integrally with its cavity (11) and said notches (15, 16).

Fig. 1

Fig. 2

Fig. 3

Fig. 4

Fig. 5